# EUROPEAN PATENT SPECIFICATION

(11) **EP 0 466 888 B1**
(45) Date of publication and mention of the grant of the patent: **16.03.1994**
(21) Application number: 91903641.8
(22) Date of filing: 30.01.1991
(51) Int. Cl.: B60S 1/48, F04D 29/62, F04D 13/00

(54) **IMPELLER PUMP OF CLEANING LIQUID FOR MOTOR VEHICLES**
REINIGUNGSFLÜSSIGKEITSDRUCKPUMPE FÜR KRAFTFAHRZEUGE
POMPE A IMPULSIONS DE LIQUIDE DE NETTOYAGE POUR VEHICULES AUTOMOBILES

(30) Priority: 05.02.1990 ES 9000331
(43) Date of publication of application: 22.01.1992
(73) Proprietor: FICO TRANSPAR, S.A., E-08191 Rubi (ES)
(72) Inventor: MOTA LOPEZ, Miguel, E-08191 Rubi (ES); MORALES GARCIA, José, Luis, E-08027 Barcelona (ES)
(74) Representative: Marx, Lothar, Dr.
(86) International application number: ES9100007
(87) International publication number: WO9111350

(56) References cited:
- EP-A- 0 027 077
- DE-A- 1 580 477
- DE-A- 1 653 726
- DE-A- 1 962 059
- DE-A- 2 060 608
- DE-A- 2 748 165
- DE-A- 3 612 389
- FR-A- 2 462 594
- FR-A- 2 495 238

## Description

### Technical Field of the Invention

The object of the present invention is a cleaning liquid spray pump for motor vehicles which, in particular, is applicable to the windscreen, rear window and headlight cleaning devices, both in private passenger vehicles and in goods transport vehicles.

### Background of the Invention

The most extensive use for cleaning liquid spray pumps, since they form original equipment in the majority of motor vehicles, is the one in which said cleaning liquid, usually consisting of a mixture in appropriate proportions of water and detergents, is sprayed on the windscreen surface, so as to clean such surface with the combined action of the windscreen wipers.

The cleaning liquid spray pumps are also used to spray said liquid against the rear window surface and on the headlight surfaces of motor vehicles, using likewise the combined action of wipers or squeegees for cleaning such surfaces.

Another known action of the cleaning liquid spray pumps is to spray said liquid on the surface of the motor vehicle headlights under high pressure, so that the impact of the liquid on the surface is sufficient to clean the headlights without needing wipers or squeegees, thereby removing the accumulated dust, mud, ice, etc. This application is of special interest in those latitudes where the usual low temperatures cause ice deposits, the thickness of which makes said wipers or squeegees ineffective.

The size of the cleaning liquid spray pumps depends on the flowrate and pressure needs for each particular application. It also depends on the operating parameters set by the current regulations for these devices.

The known embodiments of cleaning liquid spray pumps wholly or partially comprise the following operative members:
- a multipiece casing formed by: a tubular extension for aspirating the cleaning liquid contained in a reservoir provided therefor, a pumping chamber housing the suction-discharge impeller, a discharge nozzle allowing connexion thereof to the tubing distributing the cleaning liquid to the points of use and a housing for the impeller electric drive motor;
- a suction-discharge impeller provided with a pronounced axial suction extension;
- a seal preventing the ingress of cleaning liquid in the impeller drive motor housing; and
- a d.c. electric motor driving the suction-discharge impeller, as said above, the motor being electrically connected to the supply by corresponding connexion terminals integrated in the motor structure and extending to the outside through slots formed therefor in the said multipiece casing.

As an example of said cleaning liquid drive spray pumps for motor vehicles, there is cited utility model 244.882 pertaining to an electric windscreen wiper pump which, with the innovating elements characterising it, contains all the operative members succinctly described above.

Also worthy of mention as an example of the aforesaid operative members of cleaning liquid spray pumps is utility model 244.883 for a seal applicable, because of its special design and functional features as a sealing member between the pumping chamber and the housing of the casing containing the suction-discharge impeller drive motor.

Generally speaking, the known embodiments of cleaning liquid spray pumps have, as far as the casing is concerned, a large number of complex to make and assemble components which considerably increase the finished product cost and are the cause of frequent breakdowns and/or faulty operation, because of their very complexity. Furthermore, the degree of sealing achieved by said spray pumps in the impeller electric drive motor housing is also the cause of faulty operation, caused mainly by the corrosion processes suffered by the components of said electric motor, which processes are due both to the ingress of cleaning liquid in said housing and the ingress of liquid from the outside.

A cleaning liquid spray pump according to the preamble of claim 1 is known from DE-A- 2 748 165.

### Summary of the Invention

With a view to providing a new embodiment of spray pump which, on the one hand, reduces the number of casing components to a minimum, thereby obtaining a reduction of the cost of the finished article at the same time as the operative reliability of the unit is increased and, on the other hand, which achieves an optimum level of watertightness for the suction-discharge impeller electric drive motor housing, thereby reducing also the causes of misfunctioning, a cleaning liquid spray pump for motor vehicles of a new structure is disclosed.

The cleaning liquid spray pump for motor vehicles of the invention is formed by a structure comprising the following operative members:
- an essentially cylindrical casing made preferably from plastics materials of appropriate mechanical properties, which constituent portions may be assembled together, and which is formed at one end thereof with an axial tubular cleaning liquid suction extension which is provided at the free end thereof with one or several transverse suction notches, with a pumping chamber dimensioned conveniently to house the suction-discharge impeller, with a discharge nozzle disposed tangentially to the pumping chamber and through which the cleaning liquid aspirated by the suction-discharge impeller is discharged, said discharge nozzle having mechanical means allowing the connexion of the ducting distributing the discharged cleaning liquid to the points of use, and by a housing containing and locating the suction-discharge impeller electric drive motor;
- a suction-discharge impeller comprising a variable number of suitably dimensioned, equidistantly spaced apart blades or fins, forming an axial suction extension co-extensive with the length of the axial tubular suction extension of the casing and in which it is contained, the suction-discharge impeller being provided also with mechanical means allowing it to be firmly coupled to the corresponding free end of the electric drive motor shaft;
- a pumping chamber sealing bushing preventing the ingress of cleaning liquid in the housing locating the electric drive motor, the coupling of the free end of the drive motor shaft to the suction-discharge impeller being effected through said sealing bushing; and,
- a d.c. electric drive motor which is connected to the supply by means of terminals integrated in the motor structure itself and which project outwardly through the corresponding through slots and which form the end of the casing opposite to the end formed by the axial tubular suction extension;

and which is characterised in that the casing is formed by a one-piece pump body and by an also one-piece rear cover with said pump body and rear cover being susceptible of being connected together by corresponding mechanical means, said pump body comprising an axial tubular suction extension, a pumping chamber, a discharge nozzle and a housing which, adjacent the said pumping chamber, is dimensioned to house the pumping chamber sealing bushing and, wholly or in part, the electric drive motor, said housing having an internal drain chamber, adjacent the pumping chamber, which is provided with radial drain openings which communicate with the outside of said drain chamber and, the rear cover being provided with additional sealing means for the external terminals for connexion of the electric drive motor to the supply and which simultaneously act as dampers for the vibrations generated by operation of said electric drive motor.

The fact that the casing of the invention is formed by two members, the above mentioned pump body and the rear cover which may be assembled together with mechanical means defined therein, is a clear differentiation distinguishing it over the known embodiments in which the casing is formed by three or more members, since said casings generally have as component parts a main body, housing the drive motor and comprising the pumping chamber, a tubular suction extension, an elbowed body acting as discharge nozzle, and a rear closing cover. All these members must be assembled together using therefor welding techniques and/or complementary mechanical means appropriate for each joint, all of this implying a large number of assembly operations and making it hard to achieve the appropriate level of sealing required by the casing.

In this way, the two piece casing of the invention provides a maximum reduction of the assembly operations of the members forming said casing, with the consequent reduction of cost and it simultaneously reduces the attainment of an appropriate level of casing watertightness in the joint between the pump body and the rear cover, both mentioned above, substantially increasing the reliability of the thus formed unit.

It is also a feature of the spray pump of the invention that the mechanical means for assembling the pump body and the rear cover firmly and tightly together are formed by suitably dimensioned projections and recesses, the number and arrangement of which allows them to be complementarily adjustably connected together, said projections and recesses being located on respective stepped cylindrical surfaces formed complementarily on the free ends of the pump body and the rear cover respectively.

The drain chamber, which is characteristic of the object of the invention, adjacent the pumping chamber and formed in the pump body of the casing, is disposed coaxially relative to the longitudinal axis of the spray pump, said drain chamber, which is open at the electric drive motor housing end, being delimited by an extension of the pumping chamber which, as a tubular wall, extends lengthwise over a sufficient distance, and by the inner surface of the pump body, said drain chamber being provided with an appropriate number of radial drain openings which suitably disposed and dimensioned place the drain chamber in communication with the outside.

The sealing bushing of the pumping chamber of the spray pump of the invention is characterised in that it is provided with a through hole having stepped diameters forming on the side facing the electric motor housing an amply dimensioned drain cavity, the longitudinal closing wall of which is formed by a radial drain notch of suitable width and which is at least as deep as the said drain cavity.

Depending on the material used for making the pumping chamber sealing bushing, said bushing comprises on the outer cylindrical surface thereof a suitably dimensioned O-ring housed in a coaxial retaining groove and the impeller electric drive motor shaft guiding portion of the sealing bushing through hole comprises a seal of adequate design.

With the pumping chamber sealing bushing suitably housed in the casing pump body, the joint action of the drain chamber of said pump body and of the radial drain notch of the sealing bushing causes any liquid penetrating in the casing of the cleaning liquid spray pump of the invention to be returned outside by simple gravity through the radial drain apertures formed in said pump body.

In this way, liquid is prevented from accumulating in the casing and consequently the corrosion of the impeller electric drive motor components is substantially limited. As said before, this corrosion is a frequent cause of breakdowns and/or misoperation of the spray pump.

The additional sealing means for the external terminals for connexion of the impeller electric drive motor which extend to the outside by means of through slots formed in the casing rear cover, are formed by a substantially dimensioned, essentially annular shaped flat washer, having: on one side, two essentially parallelepipedic through projections which coincide in position with the also through slots formed in the casing rear cover and in which said through projections may be snugly inserted to be firmly housed and project outwardly in a sufficient distance; on the opposite side with a variable number of suitably dimensioned, mutually equidistant projections which project in a sufficient distance to form the corresponding damped support points for the electric motor; and, the centre orifice, an irregular contour snugly mating with the contour of the electric motor positioning projection formed in the inside of said rear cover.

In this way, the external connexion terminals integrated in the electric drive motor project outwardly very snugly through the through projections formed on the previously described flat washer, practically preventing the ingress of liquids in the casing through this means.

Simultaneously, the projections formed on the opposite side of the flat gasket as described, forming damped points of support for the electric motor, act as suppressors of the vibration and noise generated during operation of the said motor.

### Brief Description of the Drawings

The cleaning liquid spray pump for motor vehicles of the invention is illustrated in the sheets of drawings accompanying the present specification. In the drawings:

Figure 1 is a longitudinal section view of the object of the invention.

Figure 2 is a rear view of the object of the invention.

Figure 3 is a front view of the object of the invention.

Figure 4 is a longitudinal section view of the object of the invention.

Figures 5 and 6 are front views of a component of the object of the invention.

### Detailed Description of the Embodiment

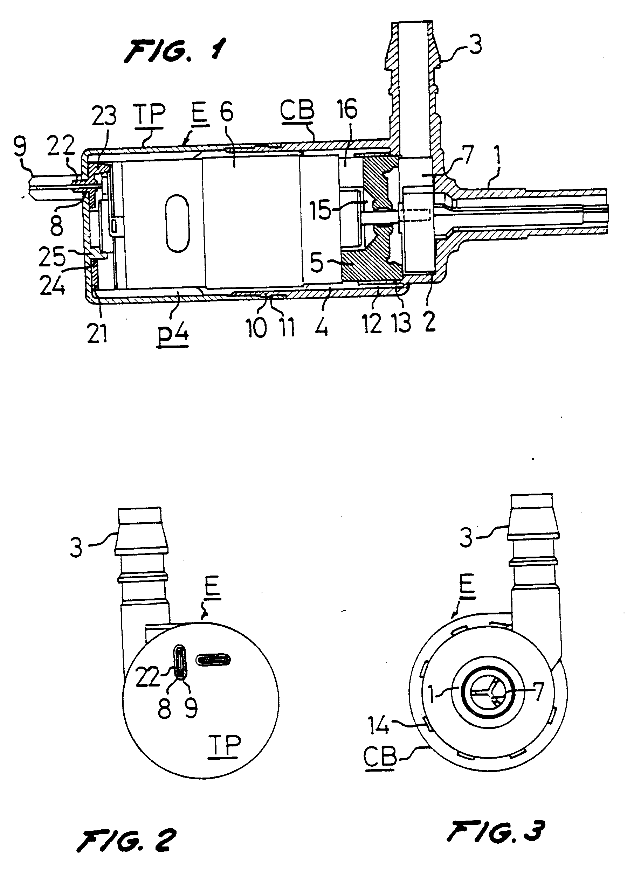

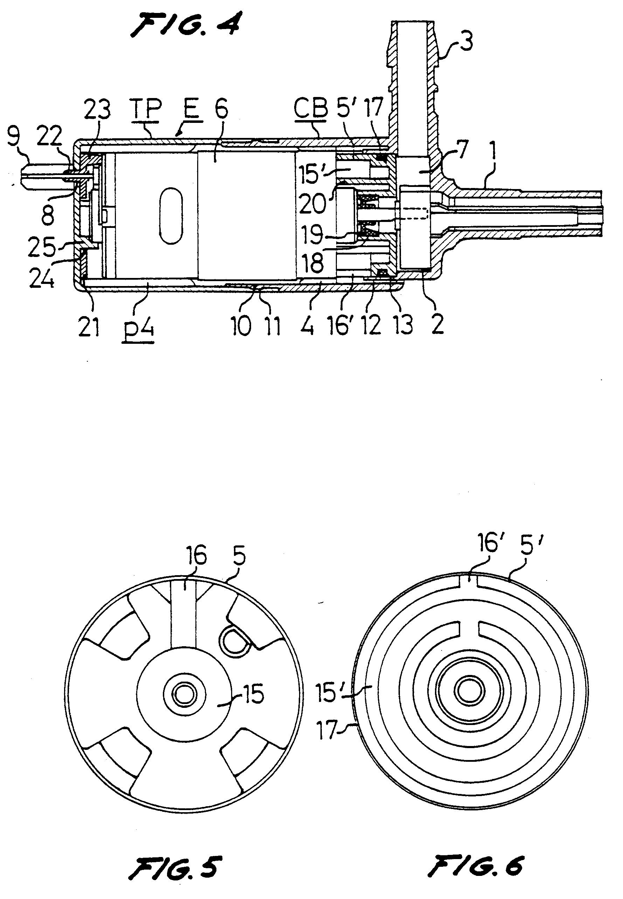

The cleaning liquid spray pump for motor vehicles of the invention which is described as an example of embodiment is formed, as shown in detail in Figures 1 and 4 of the drawings by the essentially cylindrical casing E which is suitably dimensioned to house the remaining pump components.

Said casing E is preferably made from plastics material having mechanical properties appropriate for the intended purpose and is formed by the pump body CB and by the rear cover TP, both components CB and TP being one-piece units.

The pump body CB shown in detail in Figures 1 and 4 comprises: the axial tubular suction extension 1; the pumping chamber 2; the discharge nozzle 3; and the housing 4 which, as a longitudinal extension of the pumping chamber 2, is dimensioned to house the sealing bushing 5-5' of the said pumping chamber 2 and, in this embodiment, partly to house the electric drive motor 6 of the suction-discharge impeller 7.

The said sealing bushing has two reference numbers 5-5', because two different embodiments are shown in the drawings, 5 which is drawn in Figure 1, and 5' which is drawn in Figure 4. Likewise, all the equivalent members of both embodiments of the sealing bushing will have the same identification number, differentiated with the prime (') symbol in those illustrated in Figure 4.

Furthermore, the rear cover TP, also shown in detail in Figures 1 and 4, forms the extension p4 of the housing 4, thereby defining the housing for the said electric drive motor 6, the rear cover TP being provided with the two through holes 8 through which the connexion terminals 9 protrude to the outside and which are integrated in the structure itself of the electric drive motor 6.

Figures 1 and 4 show in detail how the pump body CB and the rear cover TP of the casing E are assembled together in a firm, tight joint, by the joint action of the projections 10 and recesses 11 forming the stepped cylindrical surfaces formed complementarily on the free ends of the said pump body CB and rear cover TP.

The housing 4 of the pump body CB is formed by the drain chamber 12 which, as shown in detail in Figures 1 and 4, is adjacent the pumping chamber 2. Said drain chamber 12, which is open at the end opposite to the electric drive motor 6 housing, is disposed coaxially to the longitudinal axis of the casing E and forms an extension 13 of the pumping chamber 2 which in tubular wall form extends over a sufficient distance, said drain chamber 12 being bounded radially by the said extension 13 and by the inner wall of the pump body CB.

The drain chamber 12 is provided with a sufficient number of radial drain apertures 14, shown in Figures 1, 3 and 4 of the drawing sheets, which are suitably disposed and dimensioned to ensure communication of the drain chamber 12 with the outside.

As described above, the housing 4 formed by the pump body CB forming the casing E houses the sealing bushing 5-5' of the pumping chamber 2.

Figures 1 and 5 of the drawings show one embodiment of the said sealing bushing 5 when it is a one-piece member and consequently made from relatively hard and resiliently deformable material, such as synthetic rubbers, among others.

Figure 1 shows in detail how the sealing bushing 5 is provided with a through orifice having a stepped bore forming an amply dimensioned drain cavity 15 facing the side corresponding to that of the housing 4 for the electric drive motor 6.

Figure 5 shows how said sealing bushing is provided with a radial drain notch 16 of suitable breadth and having a widened external aperture or outlet which extends in depth, as shown in Figure 1, over a distance corresponding to the depth of the above described drain cavity 15.

Figures 4 and 6 of the sheets of drawings show an embodiment of the sealing bushing 5', when this is made from very hard, practically undeformable plastics materials.

In this case, the sealing bushing 5' has an O-ring seal 17 mounted on the external cylindrical surface thereof in a coaxial retaining slot dimensioned such that, when said sealing bushing 5' is suitably inserted in the housing 4 of the pump body CB, the O-ring seal 17 presses against the extension 13, in tubular partition wall form, of the pumping chamber 2, providing adequate sealing.

Likewise, the through orifice 18 of the sealing bushing 5', through which the corresponding end of the electric drive motor 6 shaft is coupled to the suction-discharge impeller 7, is provided with a seal 19.

In this embodiment of the sealing bushing 5', the central tubular wall 20, shown in Figures 4 and 6, acts exclusively as a structural reinforcement, there being also defined in said sealing bushing 5' a drain cavity 15' and a radial drain notch 16', in functional correspondence with the drain cavity 15 and radial drain notch 16 formed in the sealing bushing 5 shown in Figures 1 and 5.

In any case, with the sealing bushing 5-5' suitably located in the housing 4 of the pump body CB, any ingress of cleaning liquid, or of any other liquid, in the casing E, will be drained out through the radial drain orifices 14, thereby preventing the formation of deposits and condensation which can affect the operation of the spray pump.

Figures 1 and 4 show how the rear cover TP of the casing E is provided with the flat gasket 21, which is essentially annular in shape, for sealing the passage of the connexion terminals 9 of the electric drive motor 6 through the said rear cover TP, at the same time as it acts as suppressor for the vibration generated by the operation of the said electric motor 6.

The two through ridges 22 formed on one of the faces of the flat gasket 21 extend to the outside sufficiently through the through holes 8 of the rear cover TP so that the connexion terminals 9 extend in turn through the through ridges 22 very snugly, thereby achieving a high degree of sealing in the passage of the said connexion terminals 9 through the rear cover TP, all as shown in Figures 1, 2 and 4.

Figures 1 and 4 show how the surface of the flat gasket 21 facing the electric drive motor 6 is provided with a sufficient number of suitably dimensioned equidistant projections 23 forming damped support points for said electric motor 6, absorbing the vibration generated during the operation thereof.

The flat gasket 21 is provided with a central through hole 24 snugly fitting the positioning projection 25 of the electric drive motor 6 and formed on the rear cover TP as shown in detail in Figures 1 and 4 of the drawing sheets.

## Claims

1. A cleaning liquid spray pump for motor vehicles, formed by a structure comprising the following operative members:
- an essentially cylindrical casing (E) whose constituent portions may be assembled together, and which is formed at one end thereof with an axial tubular cleaning liquid suction extension (1) which is provided at the free end thereof with one or several transverse suction notches, with a pumping chamber (2) dimensioned to house the suction-discharge impeller (7), with a discharge nozzle (3) disposed tangentially to the pumping chamber (2) and through which the cleaning liquid aspirated by the suction-discharge impeller (7) is discharged, said discharge nozzle (3) having mechanical means allowing the connexion of the ducting distributing the discharged cleaning liquid to the points of use, and with a housing (4-p4) containing and positioning the suction-discharge impeller (7) electric drive motor (6);
- a suction-discharge impeller (7) comprising a variable number of suitably dimensioned, equidistantly spaced apart blades or fins, forming an axial suction extension co-extensive with the length of the axial tubular suction extension (1) of the casing (E) and in which it is contained, the suction-discharge impeller (7) being provided also with mechanical means allowing it to be firmly coupled to the corresponding free end of the electric drive motor (6) shaft;
- an essentially cylindrical pumping chamber (2) sealing bushing (5-5') preventing the ingress of cleaning liquid in the housing (4-p4) locating the electric drive motor (6), the coupling of the free end of the drive motor (6) shaft to the suction-discharge impeller (7) being effected through said sealing bushing (5-5'); and,
- a d.c. electric drive motor (6) which is connected to the supply by means of terminals (9) integrated in the motor (6) structure itself and which project outwardly through the corresponding through slots (8) formed in the end of the casing (E) opposite to the end formed by the axial tubular suction extension (1);
wherein the casing (E) is formed by a one-piece pump body (CB) and by an also one-piece rear cover (TP) with said pump body (CB) and rear cover (TP) being susceptible of being connected together by corresponding mechanical means (10, 11), said pump body (CB) comprising an axial tubular suction extension (1), a pumping chamber (2), a discharge nozzle (3) and a housing (4) which, adjacent the said pumping chamber (2), is dimensioned to house the pumping chamber (2) sealing bushing (5-5') and, wholly or in part, the electric drive motor (6), characterised in that said housing (4) has an internal drain chamber (12), adjacent the pumping chamber (2), which is provided with radial drain openings (14) which communicate with the outside of said drain chamber (12) and, the rear cover (TP) of the casing (E) being provided with additional sealing means (21, 22, 23) in the interior thereof for the external connexion terminals (9) of the electric drive motor (6) to the supply and which simultaneously act as dampers for the vibrations generated by operation of said suction-discharge impeller (7) electric drive motor (6).

2. The cleaning liquid spray pump for motor vehicles of claim 1), wherein the mechanical means (10, 11) for assembling the pump body (CB) and the rear cover (TP), forming the casing (E), firmly and tightly together are formed by suitably dimensioned projections (10) and recesses (11), the number and arrangement of which allows them to be complementarily adjustably connected together, said projections (10) and recesses (11) being located on respective stepped cylindrical surfaces formed complementarily on the free ends of the pump body (CB) and the rear cover (TP) respectively.

3. The cleaning liquid spray pump for motor vehicles of claims 1) and 2), wherein the internal drain chamber (12), adjacent the pumping chamber (2) and formed in the pump body (CB) of the casing (E), is disposed coaxially relative to the longitudinal axis of the spray pump, said drain chamber (12), which is open at the electric drive motor (6) housing (4) end, being delimited by an extension (13) of the pumping chamber (2) which, in tubular wall form, extends lengthwise over a sufficient distance, and by the inner surface of the pump body (CB) itself, said drain chamber (12) being provided with an appropriate number of radial drain openings (14) which suitably disposed and dimensioned place the drain chamber (12) in communication with the outside.

4. The cleaning liquid spray pump for motor vehicles of claims 1) to 3), wherein the sealing bushing (5-5') of the pumping chamber (2) is provided with a through hole having stepped diameters forming on the side facing the electric motor (6) housing (4) an amply dimensioned drain cavity (15), the longitudinal closing wall of which is formed with a radial drain notch (16) of suitable width and which is at least as deep as the said drain cavity (15).

5. The cleaning liquid spray pump for motor vehicles of claim 4), wherein the pumping chamber (2) sealing bushing (5') comprises on the outer cylindrical surface thereof a suitably dimensioned O-ring seal (17) suitably housed in a coaxial retaining groove and the impeller (7) electric drive motor (6) shaft guiding portion of the sealing bushing through hole (18) comprises a sealing gasket (19).

6. The cleaning liquid spray pump for motor vehicles of claims 1) to 4) or 5), wherein the additional means (21, 22, 23) for sealing and damping the vibrations generated by operation of the suction-discharge impeller (7) electric drive motor (6) with which the rear cover (TP) of the casing (E) is provided, are formed by a substantially dimensioned essentially annular shaped flat washer (21) having: on one side thereof, two essentially parallelepipedic through projections (22) which coincide in position with the also through slots (8) formed in the casing (E) rear cover (TP) and in which said through projections (22) may be snugly inserted to be firmly housed and project outwardly in a sufficient distance; on the opposite side, with a variable number of suitably dimensioned, mutually equidistant projections (23) which project in a sufficient distance to form the corresponding damped support points for the electric motor (6); and, the centre orifice (24), an irregular contour snugly mating with the contour of the electric motor (6) positioning projection (25) formed in the inside of the rear cover (TP) of the casing (E).

## Patentansprüche

1. Reinigungsflüssigkeits-Spraypumpe für Kraftfahrzeuge, gebildet durch eine Struktur mit den folgenden Funktions-Bauteilen:
- ein im wesentlichen zylindrisches Gehäuse (E), dessen Bestandteile zusammengebaut werden können, und welches an seinem einen Ende mit einer axialen röhrenförmigen Reinigungsflüssigkeits-Ansaugverlängerung (1) ausgebildet ist, welche an ihrem freien Ende mit einer oder mehreren Quer-Ansaugnuten versehen ist, mit einer zur Aufnahme des Ansaug-Auslaß-Flügelrades (7) dimensionierten Pumpkammer (2), mit einer Auslaßdüse (3), die tangential zur Pumpkammer (2) angeordnet ist und durch welche die vom Ansaug-Abström-Flügelrad (7) angesaugte Reinigungsflüssigkeit abgeströmt wird, wobei die Auslaßdüse (3) mechanische Einrichtungen hat, die die Verbindung der die abgeströmte Reinigungsflüssigkeit verteilenden Leitung mit den Verwendungspunkten erlauben, und mit einem Gehäuse (4 - p4), welches den elektrischen Antriebsmotor (6) des Ansaug-Auslaß-Laufrades (7) enthält und positioniert;
- ein Ansaug-Auslaß-Flügelrad (7) mit einer variierbaren Anzahl von geeignet dimensionierten äquidistant beabstandeten Schaufeln oder Rippen, die eine axiale Ansaugverlängerung ausbilden, die sich über die gleiche Länge wie die axiale röhrenförmige Ansaugverlängerung (1) des Gehäuses (E) erstreckt und in welcher sie enthalten ist, wobei das Ansaug-Auslaß-Flügelrad (7) auch mit mechanischen Einrichtungen versehen ist, die es ihm erlauben, fest an das entsprechende freie Ende des Schaftes des elektrischen Antriebsmotors (6) gekoppelt zu werden;
- eine im wesentlichen zylindrische Dichtungsbuchse (5 - 5') für die Pumpkammer (2), die den Eintritt von Reinigungsflüssigkeit in das Gehäuse (4 - p4) verhindert, welches den elektrischen Antriebsmotors (6) positioniert, wobei die Kupplung des freien Endes des Schaftes des Antriebsmotors (6) mit dem Ansaug-Auslaß-Flügelrad (7) durch die Dichtungsbuchse (5 - 5') bewirkt wird; und
- ein elektrischer Gleichstrom-Antriebsmotor (6), der mit der Versorgung mittels Anschlüssen (9) verbunden ist, die in die Motor (6) - Struktur selbst integriert sind und welche nach außen durch die entsprechenden Durchgangsschlitze (8) hervorstehen, die in dem Ende des Gehäuses (E) ausgebildet sind, welches dem durch die axiale röhrenförmige Ansaugverlängerung (1) ausgebildeten Ende gegenüberliegt;
wobei das Gehäuse (E) durch einen einteiligen Pumpkörper (CB) und durch einen ebenso einteiligen hinteren Deckel (TP) ausgeformt wird, wobei der Pumpenkörper (CB) und der hintere Deckel (TP) dazu geeignet sind, miteinander durch entsprechende mechanische Einrichtungen (10, 11) verbunden zu werden, wobei der Pumpkörper (CB) eine axiale röhrenförmige Ansaugverlängerung (1), eine Pumpkammer (2), eine Anlaßdüse (3) und ein Gehäuse (4) aufweist, welches, benachbart zur Pumpkammer (2), zur Aufnahme der Dichtungsbuchse (5 - 5') der Pumpenkammer (2) und vollständig oder teilweise, des elektrischen Antriebsmotors (6) dimensioniert ist,
**dadurch gekennzeichnet**, daß
- das Gehäuse (4) eine innere Ablaßkammer (12), benachbart zur Pumpkammer (2) hat, welche mit radialen Ablaßöffnungen (14) versehen ist, welche mit der Außenseite der Ablaßkammer (12) in Verbindung sind, und wobei der hintere Deckel (TP) des Gehäuses (E) in seinem Inneren mit zusätzlichen Dichtungseinrichtungen (21, 22, 23) für die externen Verbindungsanschlüsse (9) des elektrischen Antriebsmotors (6) zu der Versorgung versehen ist, welche gleichzeitig als Dämpfer für die Vibrationen, die durch den Betrieb des elektrischen Antriebsmotors (6) für das Ansaug-Auslaß-Flügelrad (7) erzeugt werden.

2. Reinigungsflüssigkeits-Spraypumpe für Kraftfahrzeuge nach Anspruch 1, wobei die mechanischen Einrichtungen (10, 11) zum festen und dichten Zusammenbauen des Pumpkörpers (CB) und des hinteren Deckels (TP), die das Gehäuse (E) bilden, aus geeignet dimensionierten Vorsprüngen (10) und Vertiefungen (11) ausgebildet sind, deren Anzahl und Anordnung es ihnen erlaubt, komplementär einstellbar miteinander verbunden zu werden, wobei die Vorsprünge (10) und die Vertiefungen (11) an jeweiligen abgestuften zylindrischen Oberflächen angeordnet sind, die komplementär an den freien Enden des Pumpkörpers (CB) bzw. des hinteren Deckels (TP) ausgebildet sind.

3. Reinigungsflüssigkeits-Spraypumpe für Kraftfahrzeuge nach den Ansprüchen 1 und 2, wobei die der Pumpkammer (2) benachbarte und in dem Pumpkörper (CB) des Gehäuses (E) ausgebildete Ablaßkammer (12) koaxial relativ zur Längsachse der Spraypumpe angeordnet ist, wobei die Ablaßkammer (12), welche am Ende des Gehäuses (4) für den elektrischen Antriebsmotor (6) offen ist, begrenzt wird durch eine Verlängerung (13) der Pumpenkammer (2), welche sich in Form einer Rohrwand längs über eine genügende Distanz erstreckt, und durch die innere Oberfläche des Pumpkörpers (CB) selbst, wobei die Ablaßkammer (12) mit einer geeigneten Anzahl von radialen Ablaßöffnungen (14) versehen ist, welche, geeignet angeordnet und dimensioniert, die Ablaßkammer (12) in Verbindung mit der Außenseite bringen.

4. Reinigungsflüssigkeits-Spraypumpe für Kraftfahrzeuge nach den Ansprüchen 1 bis 3, wobei die Dichtungsbuchse (5 - 5') der Pumpenkammer (2) mit einem Durchgangsloch mit abgestuften Durchmessern versehen ist, welches auf der dem Gehäuse (4) des Elektromotors (6) zugewandten Seite eine reichlich dimensionierte Ablaßkammer (15) ausbildet, deren Längsabschlußwand mit einer radialen Ablaßnut (16) geeigneter Breite ausgeformt ist und welche mindestens so tief ist wie die Ablaßkammer (15).

5. Reinigungsflüssigkeits-Spraypumpe für Kraftfahrzeuge nach Anspruch 4, wobei die Dichtungsbuchse (5') der Pumpenkammer (2) an ihrer äußeren zylindrischen Oberfläche eine geeignet dimensionierte O-Ring-Dichtung (17) aufweist, die geeignet in einer koaxialen Rückhaltenut aufgenommen wird, wobei der Führungsabschnitt des Durchgangslochs (18) der Dichtungsbuchse für den Schaft des elektrischen Antriebsmotors (6) des Flügelrades (7) eine abdichtende Dichtung (19) enthält.

6. Reinigungsflüssigkeits-Spraypumpe für Kraftfahrzeuge nach den Ansprüchen 1 bis 4 oder 5, wobei zusätzliche Einrichtungen (21, 22, 23) zum Abdichten und Dämpfen der Vibrationen, die durch den Betrieb des elektrischen Antriebsmotors (6) des Ansaug-Auslaß-Laufrades (7), mit dem der hintere Deckel (TP) des Gehäuses (E) versehen ist, durch eine reichlich dimensionierte, im wesentlichen ringförmige flache Scheibe (21) gebildet werden, mit: An ihrer einen Seite zwei im wesentlichen parallel flachen Durchgangsvorsprüngen (22), welche in ihrer Position mit den ebenso durchgehenden, im hinteren Deckel (TP) des Gehäuses (E) ausgeformten Schlitzen (8) übereinstimmen und in welche die Durchgangsvorsprünge (22) satt eingesetzt werden können, um fest aufgenommen zu werden und nach außen in einer genügenden Distanz vorzustehen; an der gegenüberliegenden Seite einer variierbaren Anzahl von geeignet dimensionierten, wechselseitig äquidistanten Vorsprüngen (23), welche über eine genügende Distanz vorstehen, um die entsprechenden gedämpften Lagerpunkte für den Elektromotor (6) bilden; und der Zentrumsmündung (24), einer unregelmäßigen Kontur, die satt mit der Kontur des Positionierungsvorsprungs (25) des Elektromotors (6) zusammenpaßt, welcher in der Innenseite des hinteren Deckels des Gehäuses (E) ausgebildet ist.

## Revendications

1. Pompe de pulvérisation de liquide de nettoyage pour véhicules automobiles, constituée d'une structure comprenant les éléments opérationnels suivants :
- une enceinte essentiellement cylindrique (E), dont les parties constitutives peuvent être assemblées et présentant, à l'une de ses extrémités, une extension axiale tubulaire (1) d'aspiration du liquide de nettoyage, laquelle est pourvue, à son extrémité libre, d'une ou de plusieurs entailles d'aspiration transversales, et comprenant : une chambre de pompage (2) dimensionnée de manière à pouvoir loger le rotor d'aspiration/refoulement (7) ; une buse d'échappement (3) agencée tangentiellement à la chambre de pompage (2) et par laquelle est refoulé le liquide de nettoyage aspiré par le rotor d'aspiration/refoulement (7), ladite buse d'éjection (3) présentant des moyens mécaniques qui permettent le raccordement de la conduite distribuant le liquide de nettoyage refoulé aux points d'utilisation ; et un logement (4-p4) renfermant et positionnant le moteur électrique (6) d'entraînement du rotor d'aspiration/refoulement (7) ;
- un rotor d'aspiration/refoulement (7) comprenant un nombre variable d'ailettes ou palettes de dimensions convenables et équidistantes, constituant une extension d'aspiration axiale qui s'étend également dans le sens de la longueur de l'extension d'aspiration tubulaire axiale (1) de l'enceinte (E) et dans laquelle elle est comprise, le rotor d'aspiration/refoulement (7) étant également équipé de moyens mécaniques lui permettant d'être accouplé solidement à l'extrémité libre correspondante de l'arbre du moteur électrique d'entraînement (6) ;
- un manchon d'étanchéité (5-5') de la chambre de pompage (2) s'opposant à l'intrusion de liquide de nettoyage dans le logement (4-p4) renfermant le moteur d'entraînement électrique (6), l'accouplement de l'extrémité libre de l'arbre du moteur d'entraînement (6) au rotor d'aspiration/refoulement (7) s'opérant par l'intermédiaire dudit manchon d'étanchéité (5-5') ; et,
- un moteur d'entraînement électrique (6) à courant continu raccordé à l'alimentation par des bornes (9) intégrées dans la structure du moteur (6) proprement dite, et qui ressortent, vers l'extérieur, au-travers d'encoches débouchantes (8) correspondantes, prévues à l'extrémité de l'enceinte (E), à l'opposé de l'extrémité formée par l'extension d'aspiration tubulaire axiale (1),
pompe dans laquelle l'enceinte (E) est constituée par un corps de pompe monobloc (CB) et par un élément de recouvrement arrière (TP), également monobloc, ledit corps de pompe (CB) et ledit élément de recouvrement arrière (TP) étant susceptibles d'être raccordés entre eux par des moyens mécaniques correspondants (10, 11), le corps de pompe (CB) précité comprenant une extension d'aspiration tubulaire axiale (1), une chambre de pompage (2), une buse d'échappement (3) et un logement (4) voisin de ladite chambre de pompage (2), lequel est dimensionné de manière à pouvoir loger le manchon d'étanchéité (5, 5') de la chambre de pompage (2) et, complètement ou partiellement, le moteur d'entraînement électrique (6), pompe caractérisée en ce que le logement (4) présente une chambre de drainage interne (12) voisine de la chambre de pompage (2), qui est dotée d'ouvertures de drainage radiales (14) communiquant avec l'extérieur de ladite chambre de drainage (12), et l'élément de recouvrement arrière (TP) de l'enceinte (E) étant pourvu intérieurement de moyens d'étanchéité supplémentaires (21, 22, 23), pour les bornes externes de connexion (9) pour l'alimentation du moteur d'entraînement électrique (6), et qui remplissent simultanément la fonction d'amortisseurs pour les vibrations générées par le fonctionnement du moteur électrique d'entraînement (6) du rotor d'aspiration/refoulement (7).

2. Pompe de pulvérisation de liquide de nettoyage pour véhicules automobiles suivant la revendication 1, dans laquelle les moyens mécaniques (10, 11) pour assembler solidement et hermétiquement le corps de pompe (CB) et l'élément de recouvrement arrière (TP) constituant l'enceinte (E) sont formés par des saillies (10) et des évidements (11) de dimensions adéquates, dont le nombre et la disposition leur permet d'être raccordés entre eux de manière complémentaire, avec une possibilité d'ajustement, les saillies (10) et évidements (11) susmentionnés étant situés sur des surfaces cylindriques étagées, prévues de manière complémentaire sur les extrémités libres du corps de pompe (CB) et de l'élément de recouvrement arrière (TP), respectivement.

3. Pompe de pulvérisation de liquide de nettoyage pour véhicules automobiles suivant les revendications 1 et 2, dans laquelle la chambre de drainage interne (12) voisine de la chambre de pompage (2) et prévue dans le corps de pompe (CB) de l'enceinte (E), est disposée coaxialement à l'axe longitudinal de la pompe de pulvérisation, ladite chambre de drainage (12), qui est ouverte au niveau de l'extrémité du logement (4) du moteur électrique d'entrainement (6), étant délimitée par une extension (13) de la chambre de pompage (2) qui, sous forme de paroi tubulaire, s'étend dans le sens de la longueur sur une distance suffisante, et par la surface intérieure du corps de pompe (CB) proprement dite, ladite chambre de drainage (12) étant dotée d'un nombre adéquat d'ouvertures de drainage radiales (14) lesquelles, disposées et dimensionnées de manière convenable, mettent la chambre de drainage (12) en communication avec l'extérieur.

4. Pompe de pulvérisation de liquide de nettoyage pour véhicules automobiles suivant les revendications 1 à 3, dans laquelle le manchon d'étanchéité (5, 5') de la chambre de pompage (2) est doté d'un trou débouchant présentant des diamètres étagés formant, sur la face opposée au logement (4) du moteur électrique (6), une cavité de drainage (15) d'amples dimensions, dont la paroi fermée longitudinale présente une saignée de drainage radiale (16) de largeur adéquate, et qui est au moins aussi profonde que ladite cavité de drainage (15).

5. Pompe de pulvérisation de liquide de nettoyage pour véhicules automobiles suivant la revendication 4, dans laquelle le manchon d'étanchéité (5, 5') de la chambre de pompage (2) comporte, sur sa surface cylindrique extérieure, un joint d'étanchéité torique (17) de dimensions convenables, adéquatement logé dans une gorge de retenue coaxiale, pompe dans laquelle la portion du trou débouchant (18) du manchon d'étanchéité qui guide l'arbre du moteur électrique d'entraînement (6) du rotor (7), comprend une garniture d'étanchéité (19).

6. Pompe de pulvérisation de liquide de nettoyage pour véhicules automobiles suivant les revendications 1 à 4 ou 5, dans laquelle les moyens supplémentaires (21, 22, 23) d'étanchéité et d'amortissement des vibrations générées par le fonctionnement du moteur électrique d'entraînement (6) du rotor d'aspiration/refoulement (7), dont est pourvu l'élément de recouvrement arrière (TP) de l'enceinte (E), sont constitués par une rondelle plate (21) substantiellement annulaire, de dimensions adéquates, présentant : sur l'une de ses faces, deux saillies continues (22), essentiellement parallélépipédiques, qui coincident en position avec les encoches (8) débouchantes, prévues dans l'élément de recouvrement arrière (TP) de l'enceinte (E), et dans lesquelles lesdites saillies continues (22) peuvent s'insérer avec un ajustement précis, pour être logées fermement et faire saillies vers l'extérieur sur une distance suffisante ; ladite rondelle étant munie, sur sa face opposée, d'un nombre variable de saillies (23) mutuellement équidistantes, de dimensions adéquates, qui dépassent sur une distance suffisante pour former les supports d'amortissement correspondants, pour Le moteur électrique (6) ; et, l'orifice central (24) présente un contour irrégulier épousant, avec un ajustement précis, le contour de la saillie de positionnement (24) du moteur électrique (6) prévue à l'intérieur de l'élément de recouvrement arrière (TP) de l'enceinte (E).
